# EUROPÄISCHE PATENTSCHRIFT

(11) **EP 1 577 551 B1**
(45) Veröffentlichungstag und Bekanntmachung des Hinweises auf die Patenterteilung: **04.07.2012**
(21) Anmeldenummer: 05004903.0
(22) Anmeldetag: 07.03.2005
(51) Int. Cl.: F03D 11/00

(54) **Windenergieanlage**
Wind turbine
Eolienne

(30) Priorität: 17.03.2004 DE 102004012946
(43) Veröffentlichungstag der Anmeldung: 21.09.2005
(73) Patentinhaber: Stemmann-Technik GmbH, 48465 Schüttorf (DE)
(72) Erfinder: Wilmes, Thomas, 49090 Osnabrück (DE); Venker, Michael, 48465 Schüttorf (DE)
(74) Vertreter: Griepenstroh, Jörg

(56) Entgegenhaltungen:
- EP-A1- 0 718 495
- EP-A1- 1 209 446
- WO-A1-03/054389
- WO-A1-2004/044419
- DE-A1- 4 436 197
- DE-C1- 10 022 128

## Beschreibung

Die Erfindung betrifft eine Windenergieanlage mit einer Vorrichtung zur kontinuierlichen Entladung elektrostatischer Energie.

In der DE 44 36 197 C2 wird eine Windenergieanlage mit einer Blitzschutzeinrichtung beschrieben. Es ist eine Blitzüberleitung von den Rotorblättern zu einem feststehenden, elektrisch leitenden Bauteil des geerdeten Maschinenträgers vorgesehen. Die Blitzschutzüberleitung ist ein im Bereich der Rotorblattwurzel in einem Isolations-Abstand zur Rotornabe angeordnetes, mit der Rotorblattwurzel in elektrischer Wirkverbindung stehendes Blitzableitungsorgan, das einen Überleitungsvorsprung aufweist, der dem feststehenden, elektrisch leitenden Bauteil des Maschinenträgers bis auf einen vorbestimmten Abstand angenähert ist. Bei dieser Blitzschutzeinrichtung sind zwei Funkenstrecken vorgesehen. Die erste Funkenstrecke befindet sich zwischen einem Aluminiumring an der Rotorblattwurzel und einer Fangstange. Am anderen Ende der Fangstange befindet sich eine zweite Funkenstrecke zur Überleitung des Blitzes in einen Ableitring der koaxial zur Rotorwelle angeordnet ist. Sowohl Blitzeinschläge als auch elektrostatische Ladungen werden über diese beiden Funkenstrecken abgeleitet, so dass mit häufigen Überschlägen zu rechnen ist. Diese Blitzschutzeinrichtung wurde in der DE 100 22 128 C1 weiter entwickelt.

Die DE 100 22 128 C1 offenbart eine Windenergieanlage, die mit einer Vorrichtung zur kontinuierlichen elektrostatischen Entladung von wenigstens einem Rotorblatt ausgestattet ist. Elektrostatische Aufladung eines Rotorblatts kann durch die Luftreibung der rotierenden Rotorblätter entstehen. Die statische Aufladung erfolgt so lange, bis die Überschlagspannung der vorgesehenen Luftstrecke erreicht wird. Durch das Aufladen der rotierenden Rotorblätter kommt es regelmäßig zu Überschlägen an der Funkenstrecke mit ebenso regelmäßigen unerwünschten Störungen der Elektronik. Es wird daher ein Statikableiter vorgeschlagen, der aus einer einfachen elektrischen Impedanz mit einer ohmschen und einer induktiven Komponente besteht. Es wird vorgeschlagen, im Bereich der Rotorblattwurzel auf Höhe eines die Rotorblattwurzel umgebenden Aluminiumrings eine Fangstange als Blitzableitungsorgan anzuordnen, die über einen Überleitungsvorsprung einem elektrisch leitenden Ableitring bis auf einen vorbestimmten Abstand, z.B. 3 mm, angenähert ist. Zwischen dem Aluminiumring und dem Blattadapter ist der Statikableiter leitend angeordnet. Diese Kombination einer Vorrichtung zur kontinuierlichen Entladung elektrostatischer Ladung mit einer Funkenstrecke erfordert aufgrund der vorgeschlagenen Fangstange relativ viel Bauraum, da der Durchmesser des Ableitrings je nach Größe der Windenergieanlage erheblich sein kann. Die Fangstange muss hinreichend biegesteif ausgeführt sein, damit ein vorbestimmter Abstand zu dem Ableitring eingehalten werden kann. Mit zunehmender Länge der Fangstange ist es schwierig, die Abstände exakt einzuhalten, ohne die Fangstange zusätzlich abzustützen oder steifer zu gestalten. Auch bei der weiter entwickelten Blitzschutzeinrichtung erfolgt die Ableitung des Blitzes der elektrostatischen Ladungen grundsätzlich über eine gemeinsame Funkenstrecke zwischen dem Überleitungsvorsprung und dem elektrisch leitenden Ableitring. Die Vorrichtung zur kontinuierlichen Entladung elektrostatischer Ladungen ist lediglich zwischen der Rotorblattwurzel und der Fangstange wirksam.

Aus der DIN IEC88/1117/CD (VDE 0127 Teil 24) sind Maßnahmen zum Schutz von Lagern und Getrieben bei Windenergieanlagen bekannt. Lichtbögen zwischen Lagerlaufflächen und den Wälzkörpern können genügend Energie führen, um starken Lochfraß zu verursachen. Insbesondere bei Offshore-Windenergieanlagen können durch Blitzschlag verursachte Lagerschäden hohe Instandsetzungskosten verursachen. Bei Hauptwellenlagern, Getrieben und Generatorlagern ist es schwierig, die notwendige Schmierung zur Verminderung der Reibung und einen guten metallischen Kontakt, der zur Führung von Blitzströmen notwendig ist, gleichermaßen zu erreichen. Es ist bekannt, den Anteil der durch das Hauptwellenlager fließenden Blitzströme durch alternative Strompfade aus Schleifkontakten, Bürsten oder Funkenstrecken zu verringern. Große Lager besitzen niedrige Impedanzen, während Schleifkontakt, Bürsten oder Funkenstrecken mit ihren Verbindungen gegen Erde höhere Impedanzen aufweisen. Aus diesem Grund können derartige Maßnahmen Blitzströme nicht vollständig von Lagern fernhalten. Ableitungsbauteile wie Kohlebürsten sind in der Regel für kleinere Ströme ausgelegt. Dies kann zu Lichtbogenbildungen über oder im Bauteil selbst führen, wenn es mit einem Blitzstrom beaufschlagt wird.

Aus der nachveröffentlichten WO 2004/044419 A1 ist ein Windturbinenrotor bekannt, der eine Rotornabe und eine Vielzahl von Flügeln aufweist, wobei jede Flügelwurzel mit der Rotornabe durch ein Anstelllager derart verbunden ist, dass der Flügel um seine Langsachse relativ zu der Rotornabe schwenkbar ist. Der Flügel ist mit mindestens einem elektrisch leitenden Blitzableiter versehen, wobei eine Funkenstrecke zwischen dem Blitzableiter und der Rotornabe vorgesehen ist, wobei die Funkenstrecke so wirksam ist, dass sie einen durch den Blitzableiter hindurchgehenden Blitzstrom leitet. Zusätzlich ist zu der Funkenstrecke einen Gleitkontaktvorrichtung vorgesehen, die parallel zur Funkenstrecke geschaltet ist. Derartige Kombinationen von Funkenstrecken und Gleitkontakteinrichtungen können an mehreren, zueinander beweglichen Teilen einer Windenergleanlage angeordnet sein. Die Einstellung einer Funkenstrecke erfolgt über Abstandshalter, die sich an einer Schleifbahn abstützen.

Hiervon ausgehend liegt der Erfindung die Aufgabe zugrunde, eine Windenergieanlage bereitzustellen, bei welcher in besonders kompakter und bauraumsparender Weise ein verbesserter Blitzschutz von Lagern und Getriebeelementen erreicht werden kann.

Diese Aufgabe wird bei einer Windenergieanlage mit den Merkmalen der Patentansprüche 1 bzw. 2 dadurch gelöst, dass die Vorrichtung zur kontinuierlichen Entladung elektrostatischer Energie wenigstens ein Schleifkontaktstück umfasst, das an einem Schleifkörper elektrisch leitend anliegt und in einem elektrisch isollert befestigten blitzstromableitfähigen Halter gelagert ist, wobei an dem Halter zusätzlich wenigstens eine Funkenstrecke vorgesehen ist.

Grundsätzlich erfolgt eine Relativbewegung zwischen dem Schleifkörper und dem Schleifkontaktstück, so dass sich unterschiedliche Möglichkeiten der Anordnung und gegenseitigen Ausrichtung ergeben. Es ist vorgesehen, dass die erfindungsgemäße Ableitvorrichtung den Hauptlagern der Rotorwelle vorgeschaltet ist, um den Eintritt von Blitzströmen in die Hauptlager zu verhindern. Diese den Hauptlagern der Rotorwelle vorgeschaltete Ableitvorrichtung vereint zwei Funktionen: Zum einen können die elektrostatischen Aufladungen der Rotorblätter über das Schleifkontaktstück kontinuierlich abgeleitet werden; zweitens können die wesentlich größeren Blitzströme über die parallel geschaltete Funkenstrecke übertragen werden, da der Blitzstrom möglichst nicht von den Schleifkontaktstücken übertragen werden soll. Der Halter ist derart dimensioniert, dass enge Toleranzen an den stromableitenden Bauteilen eingehalten werden können. Insbesondere ist die Luftstrecke unterhalb der Funkenstrecke einstellbar. D.h. der Luftspalt unterhalb der Funkenstrecke kann auf die gewünschte Spaltbreite eingestellt werden, um den anlagenspezifischen Blitzschutzanforderungen gerecht zu werden. Die Funkenstrecke kann z.B. aus einer Kupfer-Wolfram-Legierung bestehen, um eine hinreichende Abbrandfestigkeit zu gewährleisten. Die Funkenstrecke ist zur Höhenverstellung durch eine Schraubverbindung elektrisch mit dem Halter gekoppelt. Durch die Justierbarkeit soll eine möglichst geringe Spaltbreite erzielt werden, die eine frühzeitige Zündung der Luftstrecke ermöglichen soll. Es wird sehr wenig Bauraum benötigt.

Die Windenergieanlage gemäß Patentanspruch 2 ist dadurch gekennzeichnet, dass die Vorrichtung zur kontinuierlichen Entladung elektrostatischer Energie wenigstens ein Schleifkontaktstück umfasst, das an einem Schleifkörper elektrisch leitend anliegt und in einem elektrisch isoliert befestigten blitzstromableitfähigen Halter gelagert, wobei an dem Halter zusätzlich wenigstens eine einstellbare Funkenstrecke vorgesehen ist. Der Schleifkörper und der Halter sind im Übergangsbereich zwischen einem Turm und dem gegenüber dem Turm um eine Vertikalachse drehbar gelagerten Maschinenträger zur elektrischen Ableitung angeordnet. Bezüglich der Einstellbarkeit der Funkenstrecke wird auf die Ausführungen zu Patentanspruch 1 Bezug genommen.

Im Übergangsbereich zwischen Maschinenträger und Turm kann der Schleifkörper durch einen separaten Schleifring auf der Turminnenseite realisiert sein. Grundsätzlich kann der Halter auch am feststehenden Turm befestigt sein, wobei der Schleifkörper an der Grundplatte des Maschinenträgers ausgebildet ist. Wesentlich ist auch hier die Kombination von Mitteln zur kontinuierlichen elektrostatischen Entladung mit einer Funkenstrecke, so dass elektrostatische Ladungen überschlagfrei ableitbar sind.

In der Ausführungsform des Patentanspruchs 3 sind diese beiden Ableitpunkte elektrisch isoliert blitzstromableitfähig miteinander verbunden, um den Blitzstrom ebenso wie elektrostatische Ladungen einem Erdungspunkt der Windenergieanlage zuzuführen. In ihrem grundsätzlichen Aufbau unterscheiden sich die vorgesehenen blitzstromableitfähigen Halter mit der Vorrichtung zur kontinuierlichen Entladung elektrostatischer Energie und der Funkenstrecke nicht. Bei der erfindungsgemäßen Windenergieanlage ist vorgesehen, dass sämtliche Blitzstrom führenden Bauteile gegenüber angrenzenden Komponenten der Windenergieanlage elektrisch isoliert sind, um mittels dieses alternativen Strompfads den Einfluss von Blitzströmen auf den Triebstrang der Windenergieanlage zu verringern.

In der Ausführungsform des Patentanspruchs 4 ist der Halter zwischen der Rotornabe und einem ersten Hauptlager der Rotorwelle angeordnet. Auf diese Weise ist gewährleistet, dass insbesondere der Blitzstrom nicht zunächst durch die Hauptlager bzw. die die Hauptlager durchsetzende Rotorwelle fließt, sondern bereits vor dem Eintritt in das der Rotornabe zugewandte Hauptlager abgeleitet wird. Die Anordnung im Inneren des Maschinenträgers bzw. der Gondel der Windenergieanlage bietet Vorteile durch gute Zugänglichkeit, einfache Wartung und geringe Baugrößen des Schleifkontaktstücks, das grundsätzlich als Verschleißteil ausgelegt ist. Ein weiterer Vorzug des Innenanbaus ist die einfache Nachrüstung einer solchen Blitzschutzeinrichtung bei einer Windenergieanlage, die bisher ohne eine solche Blitzschutzeinrichtung betrieben worden ist.

Gemäß der Ausführungsform des Patentanspruchs 5 wird der Schleifkörper von der Rotorwelle selbst gebildet oder ist ein mit der Rotorwelle lösbar verbundener Schleifring. Die metallische Rotorwelle kann bei der ersten Variante selbst zur Leitung des Blitzstroms dienen bzw. ist Bestandteil des Strompfads, wobei ein unmittelbarer Kontakt zwischen dem Schleifkontaktstück und der Rotorwelle besteht. Um Beschädigungen der Rotorwelle durch Verschleiß oder Abbrand zu vermeiden, kann ein separater Schleifring vorgesehen sein, der auf die Rotorwelle aufgebracht wird. Der Schleifring besteht aus einem geeigneten Gegenlaufwerkstoff, der einen geringen Übergangswiderstand und bei Einsatz eines Schleifkontaktstücks aus Kohle einen geringen Kohleverschleiß mit sich bringt. In der Praxis haben sich Bronzelegierungen als geeignet erwiesen.

In der Ausführungsform des Patentanspruchs 6 ist der Schleifkörper an der Rotornabe angeordnet. Der insbesondere als Schleifring ausgebildete Schleifkörper kann gegenüber der Rotornabe isoliert befestigt sein, so dass die Rotornabe selbst nicht Bestandteil des Strompfads ist. Für diesen Fall ist eine eigene elektrisch leitende Verbindung des Schleifkörpers mit den Rotorblättern erforderlich. Auch hier können Halter mit Schleifkontaktstücken in Kombination mit Funkenstrecken vorgesehen sein.

In einer weiteren Ausführungsform kann der Schleifkörper auch an dem Maschinenträger, d.h. der Gondel der Windenergieanlage befestigt sein, wobei der Halter an der Rotornabe befestigt ist. Je nach Ausrichtung des Halters sind entsprechend orientierte Schleifkörper erforderlich.

Gemäß Patentanspruch 7 ist vorgesehen, dass die Funkenstrecke auf eine Kontaktbahn gerichtet ist und dass das Schleifkontaktstück auf einer Schleifbahn gleitet, wobei die Schleifbahn und die Kontaktbahn in Abhängigkeit von der räumlichen Lage des Halters in axialer Richtung der Rotorwelle oder der Vertikalachse des Turms nebeneinander verlaufende Zylindermantelflächen oder Kreisringe sind. Schleifkörper in Form von Zylindermantelflächen können an einem koaxial zur Rotorachse verlaufenden Vorsprung sowohl an der Rotornabe als auch an dem feststehenden Maschinenträger bzw. der Gondel vorgesehen sein. Die Schleifkörper können auch als Kreisringe ausgebildet sein, d.h. die Funkenstrecke und das Schleifkontaktstück sind koaxial zur Rotorachse ausgerichtet. Bei Schleifkörpern in Form von Zylindermantelflächen sind die Schleifkontaktstücke und Funkenstrecken radial zur Rotorwelle bzw. zur Vertikalachse des Turms ausgerichtet. Die Außenableitung des Blitzstroms hat den Vorteil, dass der Blitzstrom nicht in den Maschinenträger gelangen kann. Durch den räumlichen Abstand verringert sich die Gefahr von Störeinflüssen auf die Elektronik der Windenergieanlage.

Eine in axialer oder radialer Richtung versetzte Anordnung von Funkenstrecke und Schleifkontaktstück hat den Vorteil, dass unterhalb der Funkenstrecke entstehende Einbrennungen nicht zu einer Beschädigung der Schleifbahn des Schleifkörpers führen. Grundsätzlich sind Funkenstrecke und Schleifkontaktstück dicht nebeneinander positioniert, so dass beide Bauteile auf den gleichen Schleifkörper gerichtet sind. Selbstverständlich ist auch die Montage separater Schleifkörper im Rahmen der Erfindung denkbar. Dieser Sachverhalt ist Gegenstand der Weiterbildung gemäß Patentanspruch 8.

In der Ausführungsform des Patentanspruchs 9 ist vorgesehen, dass die Funkenstrecke auf der der Rotornabe zugewandten Seite des Schleifkontaktstücks angeordnet ist. Es wird erwartet, dass bei einem Blitzeinschlag eine Ladungsverschiebung zunächst im Bereich der Funkenstrecke und anschließend im Bereich unterhalb des Schleifkontaktstücks erfolgt, so dass davon auszugehen ist, dass bei Zündung der Funkenstrecke nur ein geringerer Teil der elektrischen Ladung über das Schleifkontaktstück abfließt. Auf diese Weise kann die Standzeit des Schleifkontaktstücks verlängert werden.

Die elektrischen Ladungen werden von der Funkenstrecke und/oder dem Schleifkontaktstück über den Werkstoff des Halters oder über an dem Halter vorgesehene Leitungspfade einer Erdleitung zugeführt (Patentanspruch 10). Der Halter kann aus Korrosionsschutzgründen aus Schwermetall oder einer Messinglegierung bestehen. Grundsätzlich sind auch Halter aus anderen nicht leitenden Werkstoffen denkbar, wobei für diesen Fall innerhalb des Halters Leitungspfade vorgesehen sind, um die Funkenstrecke bzw. das Schleifkontaktstück mit einer Erdleitung zu koppeln. Bei Haltern aus nicht leitenden Werkstoffen ist eine separate Isolierung gegenüber dem Maschinenträger gegebenenfalls nicht erforderlich. In jedem Fall muss jedoch sichergestellt werden, dass Überschläge von dem Halter auf Maschinenkomponenten der Windenergieanlage verhindert werden.

In vorteilhafter Ausführungsform ist die Windenergieanlage mit einem ersten Halter ausgestattet, der zur Ladungsableitung von der Rotorwelle vorgesehen ist bzw. von der mit der Rotorwelle verbundenen Rotornabe sowie mit einem zweiten Halter, der zur Ladungsableitung im Übergangsbereich zwischen dem Turm und dem Maschinenträger angeordnet ist. Diese beiden Halter sind gegenüber dem Maschinenträger und dem Triebstrang der Windenergieanlage elektrisch isoliert und blitzstromableitfähig miteinander verbunden.

Der Gegenstand der Erfindung wird nachfolgend anhand eines in schematischen Zeichnungen dargestellten Ausführungsbeispiels näher erläutert. Es zeigen:
- Figur 1: im Teilschnitt einen Maschinenträger einer Windenergieanlage;
- Figur 2: die Einzelheit II aus Figur 1;
- Figur 3: die Einzelheit III aus Figur 1 und
- Figur 4: die Einzelheit IV aus Figur 1.

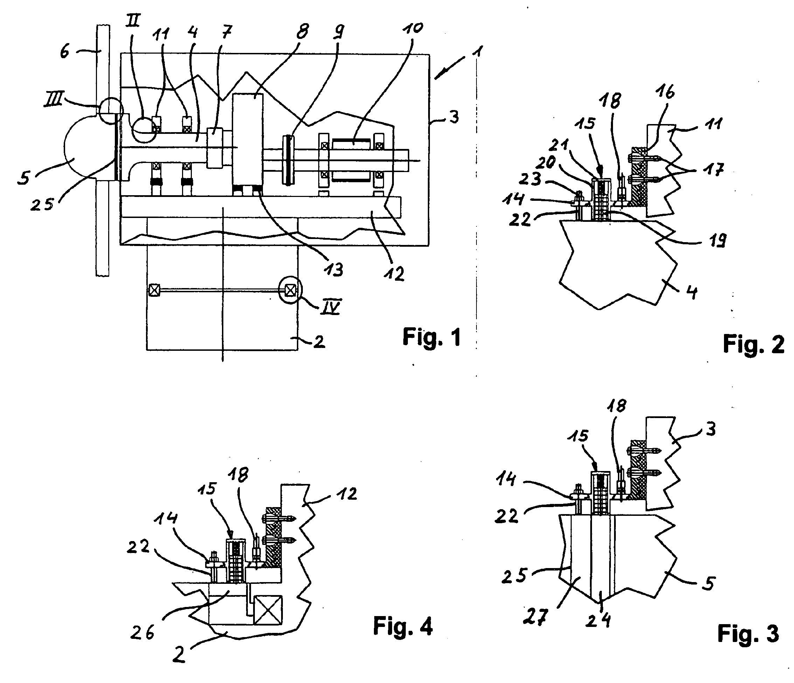

In Figur 1 ist stark vereinfacht der obere Bereich einer Windenergieanlage 1 dargestellt. Die Windenergieanlage 1 umfasst einen Turm 2 mit einem Maschinenträger 3, der auch Gondel oder Maschinenhaus genannt wird. Innerhalb des Maschinenträgers 3 ist eine Rotorwelle 4 gelagert. Die Rotorwelle 4 wird über an einer Rotornabe 5 befestigte Rotorblätter 6 angetrieben und überträgt die Drehbewegung über eine Kupplung 7, ein Getriebe 8 und eine weitere elektrisch isolierte Kupplung 9 auf einen Generator 10. Die Rotorwelle 4 ist in Hauptlagern 11 gelagert. Die Hauptlager 11 sind gegenüber der Grundplatte 12 des Maschinenträgers 3 elektrisch isoliert. Ebenso ist das Getriebe 8 gegenüber der Grundplatte 12 über eine zwischengeschaltete Isolierung 13 elektrisch isoliert. Von den Rotorblättern 6 ausgehende elektrostatische Ladungen können an den mit II und III bezeichneten Ableitungsstellen von der Rotorwelle 4 abgeleitet und über die mit IV bezeichnete Ableitungsstelle einer nicht näher dargestellten Erdungsleitung zugeführt werden. Die Ableitungsstellen II, III und IV sind gegenüber dem Maschinenträger 3 bzw. dem Triebstrang der Windenergieanlage 1 elektrisch isoliert und blitzstromableitfähig miteinander verbunden.

Figur 2 zeigt einen L-förmig konfigurierten Halter 14 mit einer Vorrichtung 15 zur kontinuierlichen Entladung elektrostatischer Energie. Der Halter 14 ist mit seinem in der Bildebene vertikal verlaufenden Schenkel an dem der Rotornabe 5 zugewandten Hauptlager 11 unter Zwischengliederung einer elektrischen Isolierung 16 befestigt. Die Befestigungsmittel 17 sind ebenfalls gegenüber dem Hauptlager 11 elektrisch isoliert. In dem in der Bildebene horizontal verlaufenden Schenkel des Halters 14 befinden sich in axialer Erstreckung ausgehend von dem Hauptlager 11 zunächst eine Erdleitung 18 bzw. ein Anschluss für eine solche Erdleitung. Die Erdleitung 18 führt in nicht näher dargestellter Weise zu dem Halter 14 gemäß Figur 4. Im axialen Abstand zu der Erdleitung 18 befindet sich die Statikvorrichtung 15. Die Statikvorrichtung 15 umfasst ein Schleifkontaktstück 19 in Form einer Kohlebürste, welche unmittelbar auf einer nicht näher dargestellten Schleifbahn der Rotorwelle 4 aufliegt. Die Rotorwelle 4 selbst kann als Schleifkörper, d.h. als Gegenpart zum Schleifkontaktstück 19 dienen. Das Schleifkontaktstück 19 ist in einem Kohleschacht 20 geführt und wird von einer Feder 21 gegen die Rotorwelle 4 gedrückt. In axialer Richtung gesehen neben dem Schleifkontaktstück 19 befindet sich eine Funkenstrecke 22, die ebenfalls an dem horizontal verlaufenden Schenkel des Halters 14 befestigt ist. Die Funkenstrecke 22 überträgt den wesentlich größeren Blitzstrom, welcher von dem Schleifkontaktstück 19 ferngehalten werden soll. Zwischen dem unteren Ende der Funkenstrecke 22 und der Rotorwelle 4 ist ein Luftspalt vorhanden. Der Blitzstrom ionisiert die Luft zwischen der Funkenstrecke 22 und der Rotorwelle 4, wodurch die Luftstrecke gezündet und der Blitzstrom über die Funkenstrecke 22 abgeleitet wird. Die Funkenstrecke 22 ist über eine Schraubverbindung 23 gegenüber dem Halter 14 und damit gegenüber der Rotorwelle 4 verlagerbar. Dadurch kann die Luftstrecke, das heißt die Spaltbreite, eingestellt werden. Bei dieser Ausführungsform besteht der Halter 14 aus einem elektrisch leitenden Material.

Der Halter 14 ist auf seiner der Isolierung 16 zugewandten Seite mit einer Riffelung ausgestattet, um bei der Montage den Abstand durch einfache Justierung zu erleichtern.

Die Ausführungsform der Figur 3 unterscheidet sich von derjenigen der Figur 2 dadurch, dass der Halter 14 nicht an dem Hauptlager 11 isoliert befestigt ist, sondern an dem Maschinenträger 3. Des Weiteren wird das Schleifkontaktstück 19 auf einen separaten Schleifkörper in Form eines Schleifrings 25 gedrückt, der umfangsseitig der Rotornabe 5 angeordnet ist. Auf diesem Schleifring 25 ist eine Schleifbahn 24 vorgesehen, um den Verschleiß des Schleifkontaktstücks 19 so gering wie möglich zu halten. Wie bei der Ausführungsform der Figur 2 ist auch bei dieser Ausführungsform die Funkenstrecke 22 in axialer Richtung der Rotornabe 5 bzw. den Rotorblättern 6 näher als die Vorrichtung 15 zur kontinuierlichen Entladung elektrostatischer Energie. Die Funkenstrecke 22 ist auf eine Kontaktbahn 27 gerichtet, die ebenfalls an dem Schleifkörper 25 ausgebildet ist. Dadurch entstehen an der Rotorwelle 4 selbst keine Einbrennungen bei Blitzüberschlägen.

Die Ausführungsform der Figur 4 unterscheidet sich hinsichtlich des Aufbaus des Halters 14 nicht von derjenigen der Figuren 2 und 3. Aus diesem Grund werden gleich bleibende Bezugszeichen für die Komponenten des Halters 14 verwendet. Der Halter 14 ist in diesem Ausführungsbeispiel innen liegend an der Grundplatte 12 des gegenüber dem Turm 2 drehbar gelagerten Maschinenträgers 3 befestigt. Die zuvor erwähnte Erdleitung 18 endet hier und speist elektrostatische Ladungen sowie Blitzströme in den Halter 14 ein, der diese entweder über das Schleifkontaktstück 19 oder die Funkenstrecke 22 in einen Schleifkörper 26 einleitet. Der Schleifkörper 26 ist in nicht näher dargestellter Weise geerdet.

### Bezugszeichenaufstellung

- 1 -: Windenergieanlage
- 2 -: Turm
- 3 -: Maschinenträger
- 4 -: Rotorwelle
- 5 -: Rotornabe
- 6 -: Rotorblatt
- 7 -: Kupplung
- 8 -: Getriebe
- 9 -: Kupplung
- 10 -: Generator
- 11 -: Hauptlager v. 4
- 12 -: Grundplatte
- 13 -: Isolierung
- 14 -: Halter
- 15 -: Statikvorrichtung
- 16 -: Isolierung an 14
- 17 -: Befestigungsmittel
- 18 -: Erdleitung
- 19 -: Schleifkontaktstück/Kohlenbürste
- 20 -: Kohleschacht
- 21 -: Feder
- 22 -: Funkenstrecke
- 23 -: Schraubverbindung
- 24 -: Schleifbahn auf 25
- 25 -: Schleifkörper/Schleifring
- 26 -: Schleifkörper
- 27 -: Kontaktbahn

## Patentansprüche

1. Windenergieanlage mit einer Rotorwelle (4) und mit einer Vorrichtung (15) zur kontinuierlichen Entladung elektrostatischer Energie sowie mit einer parallel zu dieser Vorrichtung (15) geschalteten Funkenstrecke (22) eines Blitzschutzsystems, wobei die Vorrichtung (15) zur kontinuierlichen Entladung elektrostatischer Energie wenigstens ein Schleitkontaktstück (19) umfasst, das an einem Schleifkörper (25) elektrisch leitend anliegt und in einem elektrisch isoliert befestigten blitzstromableitfähigen Halter (14) gelagert ist und wobei an dem Halter (14) zusätzlich wenigstens die eine Funkenstrecke (22) vorgesehen ist, wobei zuden vorgesehen ist, **dass** der Schleifkörper entweder mit der Rotorwelle (4) rotiert während der Halter (14) gegenüber der Rotorwelle (4) ortsfest an dem auf einem Turm (2) um eine Vertikalachse drehbar gelagerten Maschinenträger (3) befestigt ist oder wobei der Schleifkörper ortsfest mit dem Maschinenträger (3) verbunden ist, während der Halter (14) relativ zum Schleifkörper (25) bewegt wird und wobei die Luftstrecke der Funkenstrecke (22) einstellbar ist, wobei die Funkenstrecke (22) zur Höhenverstellung durch eine Schraubverbindurig (23) elektrisch mit dem Halter (14) gekoppelt ist

2. Windenergleanlage mit einer Vorrichtung (15) zur kontinulerlichen Entladung elektrostatischer Energie sowie mit einer parallel zu dieser Vorrichtung (15) geschalteten Funkenstrecke (22) eines Blitzschutzsystems, wobei die Vorrichtung (15) zur kontinuierlichen Entladung elektrostatischer Energie wenigstens ein Schleifkontaktstück (19) umfasst, das an einem Schleifkörper (26) elektrisch leitend anliegt und in einem elektrisch isoliert befestigten blitzstromableitfähigen Halter (14) gelagert ist, wobei zuden vorgesehen ist, **dass** an dem Halter (14) zusätzlich wenigstens die eine Funkenstrecke (22) vorgesehen ist, wobei der Schleifkörper (26) und der Halter (14) im Übergangsbereich zwischen einem Turm (2) und dem gegenüber dem Turm (2) um eine Vertikalachse drehbar gelagerten Maschinenträger (3) zur elektrischen Ableitung angeordnet sind und wobei die Luftstrecke der Funkenstrecke (22) einstellbar ist, wobei die Funkenstrecke (22) zur Höhenverstellung durch eine Schraubverbindung (23) elektrisch mit dem Halter (14) gekoppelt ist.

3. Windenergleanlage nach Anspruch 1 und 2, **dadurch gekennzeichnet, dass** die der Rotorwelle (4) zugeordneten und im Übergangsbereich zwischen Turm (2) und Maschinenträger (3) vorgesehenen Halter (14) gegenüber dem Maschinenträger und dem Triebstrang (7-11) der Windenergieanlage (1) elektrisch isoliert blitzstromableitfähig miteinander verbunden sind.

4. Windenergieanlage nach Anspruch 1 oder 3, **dadurch gekennzeichnet, dass** der Halter (14) zwischen der Rotornabe (5) und einem ersten Hauptlager (11) der der Rotorwelle (4) angeordnet ist.

5. Windenergieanlage nach Anspruch 1, 3 oder 4, **dadurch gekennzeichnet , dass** der Schleifkörper von der Rotorwelle (4) selbst gebildet wird oder ein mit Rotorwelle (4) lösbar verbundener Schleifring (25) ist.

6. Windenergieanlage nach Anspruch 1 oder 3 bis 5, **dadurch gekennzeichnet, dass** der Schleifkörper (25) an der Rotornabe (5) angeordnet ist.

7. Windenergieanlage nach einem der Ansprüche 1 bis 6, **dadurch gekennzeichnet, dass** die Funkenstrecke (22) auf eine Kontaktbahn (27) gerichtet ist und dass das Schleifkontaktstück (19) auf einer Schleifbahn (24) gleitet, wobei die Schleifbahn (24) und die Kontaktbahn (27) in Abhängigkeit von der räumlichen Lage des Halters (14) in axialer Richtung der Rotorwelle (4) oder der Vertikalachse des Turms (2) nebeneinander verlaufende Zylindermantelflächen oder Kreisringe sind.

8. Windenergieanlage nach Anspruch 7, **dadurch gekennzeichnet, dass** die Kontaktbahn (27) und die Schleifbahn (24) auf einem gemeinsamen Schleifkörper (25) oder auf seperaten Schleifkörpern angeordnet sind.

9. Windenergieanlage nach einem der Ansprüche 1 oder 3 bis 8, **dadurch gekennzeichnet, das** die Funkenstrecke (22) auf der der Rotornabe (5) zugewandten Seite des Schleifkörpers (24) angeordnet ist.

10. Windenergieanlage nach einem der Ansprüche 1 bis 9, **dadurch gekennzeichnet, dass** elektrische Ladungen von der Funkenstrecke (22) und/oder dem Kontaktstück (19) über den Werkstoff des Halters (14) oder über an dem Halter (14) vorgesehene Leitungspfade einer Erdleitung (18) zugeführt werden.

## Claims

1. Wind power system with a rotor shaft (4) and with a device (15) for continuous discharge of electrostatic energy and with a spark gap (22) of a lightning protection system (22) connected in parallel with this device (15), wherein the device (15) for continuous discharge of electrostatic energy comprises at least one slip contact piece (19) that lies electrically conductively on a slip body (25) and is mounted in an electrically isolated fixed lightning-conductive holder (14) and wherein on the holder (14) is also provided at least the one spark gap (22), wherein it is also provided that the slip body either rotates with the rotor shaft (4) while the holder (14) is fixed stationary in relation to the rotor shaft (4) on the machine support (3) mounted rotatably about a vertical axis on a tower (2) or wherein the slip body is connected stationary with the machine support (3) while the holder (14) is moved relative to the slip body (25) and wherein the air gap of the spark gap (22) is adjustable, wherein for height adjustment the spark gap (22) is coupled electrically with the holder (14) by a screw connection (23).

2. Wind power system with a device (15) for continuous discharge of electrostatic energy and with a spark gap (22) of a lightning protection system connected in parallel with this device (15), wherein the device (15) for continuous discharge of electrostatic energy comprises at least one slip contact piece (19) that lies electrically conductively on a slip body (26) and is mounted in an electrically isolated fixed lightning-conductive holder (14), wherein it is also provided that on the holder (14) is also provided at least the one spark gap (22), wherein the slip body (26) and the holder (14) in the transition area between a tower (2) and the machine support (3) mounted rotatable about a vertical axis in relation to the tower (2) are arranged for electrical discharge and wherein the air gap of the spark gap (22) is adjustable, wherein for height adjustment the spark gap (22) is coupled electrically with the holder (14) by a screw connection (23).

3. Wind power system according to claim 1 and 2, **characterised in that** the holders (14) allocated to the rotor shaft (4) and provided in the transition area between the tower (2) and machine support (3) are connected together electrically isolated and lightning-conductive in relation to the machine support and the drive train (7-11) of the wind power system (1).

4. Wind power system according to claim 1 or 3, **characterised in that** the holder (14) is arranged between the rotor hub (5) and a first main bearing (11) of the rotor shaft (4).

5. Wind power system according to claim 1, 3 or 4, **characterised in that** the slip body is formed by the rotor shaft (4) itself or is a slip ring (25) detachably connected with the rotor shaft (4).

6. Wind power system according to claim 1 or 3 to 5, **characterised in that** the slip body (25) is arranged on the rotor hub (5).

7. Wind power system according to any of claims 1 to 6, **characterised in that** the spark gap (22) is directed at a contact path (27) and that the slip contact piece (19) slides on a slip path (24), wherein the slip path (24) and the contact path (27), depending on the spatial position of the holder (14) in the axial direction of the rotor shaft (4) or the vertical axis of the tower (2), are cylinder casing surfaces or circular rings running next to each other.

8. Wind power system according to claim 7, **characterised in that** the contact path (27) and the slip path (24) are arranged on a common slip body (25) or on separate slip bodies.

9. Wind power system according to claim 1 or 3 to 8, **characterised in that** the spark gap (22) is arranged on the side of the slip body (24) facing the rotor hub (5).

10. Wind power system according to any of claims 1 or 9, **characterised in that** electrical charges are supplied from the spark gap (22) and/or the contact piece (19) via the material of the holder (14) or via conduction paths provided on the holder (14) to an earth conductor (18).

## Revendications

1. Installation éolienne comprenant un arbre rotor (4) et comprenant un dispositif (15) pour décharger en continu l'énergie électrostatique, et comprenant un éclateur (22), branché parallèlement à ce dispositif (15), d'un système de protection antifoudre, dans laquelle le dispositif (15) pour décharger en continu l'énergie électrostatique comprend au moins une pièce à contact frottant (19), qui est appliquée de manière électroconductrice sur un corps frottant (25) et est montée dans un support (14) capable de dériver des courants de foudre, fixé de manière électriquement isolée, et dans laquelle au moins ledit éclateur (22) est additionnellement fixé sur le support (14), et dans laquelle il est en outre prévu soit que le corps frottant tourne conjointement avec l'arbre rotor (4) tandis que le support (14) est fixé de façon stationnaire par rapport à l'arbre rotor (4) sur le support de machine (3) monté sur un mât (2) en rotation autour d'un axe vertical, soit que le corps frottant est relié stationnaire au support de machine (3) tandis que le support (14) est déplacé par rapport au corps frottant (25), et dans laquelle l'entrefer de l'éclateur (22) est réglable, l'éclateur (22) étant couplé électriquement avec le support (14) par une liaison à vis (23) en vue du réglage en hauteur.

2. Installation éolienne comprenant un dispositif (15) pour décharger en continu l'énergie électrostatique et comprenant un éclateur (22), branché parallèlement à ce dispositif (15), d'un système de protection antifoudre, dans laquelle le dispositif (15) pour décharger en continu l'énergie électrostatique comprend au moins une pièce à contact frottant (19), qui est appliquée de manière électroconductrice sur un corps frottant (26) et est montée dans un support (14) capable de dériver des courants de foudre, fixé de manière électriquement isolée, et dans laquelle au moins ledit éclateur (22) est en outre prévu additionnellement sur le support (14), de sorte que le corps frottant (26) et le support (14) sont agencés dans la zone de transition entre un mât (2) et le support de machine (3) monté en rotation autour d'un axe vertical par rapport au mât (2), pour établir une dérivation électrique, et dans laquelle l'entrefer de l'éclateur (22) est réglable, l'éclateur (22) étant couplé électriquement avec le support (14) par une liaison à vis (23) en vue du réglage en hauteur.

3. Installation éolienne selon la revendication 1 et 2, **caractérisée en ce que** les supports (14) associés à l'arbre rotor (4) et prévus dans la zone de transition entre le mât (2) et le support de machine (3) de manière électriquement isolée par rapport au support de machine et par rapport au train entraîné (7-11) de l'installation éolienne (1) sont reliés les uns aux autres de manière à conduire les courants de foudre.

4. Installation éolienne selon la revendication 1 ou 3, **caractérisée en ce que** le support (14) est agencé entre le moyeu de rotor (5) et un premier palier de principal (11) de l'arbre rotor (4).

5. Installation éolienne selon la revendication 1, 3 ou 4, **caractérisée en ce que** le corps frottant est formé par l'arbre rotor (4) lui-même, ou est une bague frottante (25) reliée de manière détachable à l'arbre rotor (4).

6. Installation éolienne selon la revendication 1 ou 3 à 5, **caractérisée en ce que** le corps frottant (25) est agencé sur le moyeu de rotor (5).

7. Installation éolienne selon l'une des revendications 1 à 6, **caractérisée en ce que** l'éclateur (22) est dirigé vers une piste de contact (27), et **en ce que** la pièce à contact frottant (19) coulisse sur une piste de frottement (24), ladite piste de frottement (24) et la piste de contact (27) étant des surfaces enveloppe cylindriques ou des bagues circulaires s'étendant l'une à côté de l'autre en fonction de la position dans l'espace du support (14) en direction axiale de l'arbre rotor (4) ou de l'axe vertical du mât (2).

8. Installation éolienne selon la revendication 7, **caractérisée en ce que** la piste de contact (27) et la piste de frottement (24) sont agencées sur un corps frottant commun (25) ou sur des corps frottants séparés.

9. Installation éolienne selon l'une des revendications 1 ou 3 à 8, **caractérisée en ce que** l'éclateur (22) est agencé sur le côté du corps frottant (24) tourné vers le moyeu de rotor (5).

10. Installation éolienne selon l'une des revendications 1 à 9, **caractérisée en ce que** les charges électriques de l'éclateur (22) et/ou de la pièce de contact (19) sont menées à une ligne de mise à la terre (18) via le matériau du support (14) ou via des trajets conducteurs prévus sur le support (14).
